# EUROPÄISCHE PATENTANMELDUNG

(11) **EP 1 616 691 A2**
(43) Veröffentlichungstag der Anmeldung: **18.01.2006**
(21) Anmeldenummer: 05014939.2
(22) Anmeldetag: 09.07.2005
(51) Int. Cl.: B29C 65/06

(54) **Vibrationsschweissmaschine**

(30) Priorität: 15.07.2004 DE 102004035146
(71) Anmelder: bielomatik Leuze GmbH + Co. KG, 72639 Neuffen (DE)
(72) Erfinder: Trabandt, Tim, 72639 Neuffen (DE); Jauch, Michael, 72116 Mössingen (DE)
(74) Vertreter: Patentanwälte Ruff, Wilhelm, Beier, Dauster & Partner

(57) **Zusammenfassung**

1. Vibrationsschweißmaschine.
2.1. Eine Vibrationsschweißmaschine mit einem Maschinengestell, in dem eine Aufnahmeeinheit für ein Unterwerkzeug und ein Aufnahmeteil für ein Oberwerkzeug angeordnet sind, wobei der Aufnahmeteil für das Oberwerkzeug eine Vielzahl von über seine Grundfläche verteilt angeordneten Befestigungspunkten aufweist, an denen das Oberwerkzeug mittels einer entsprechenden Anzahl von Befestigungsmitteln befestigbar ist, ist bekannt.
2.2. Erfindungsgemäß ist das Oberwerkzeug auf seiner dem Aufnahmeteil zugewandten Oberseite mit Befestigungsaufnahmen versehen, und in dem Aufnahmeteil sind Befestigungsmittel angeordnet, die zu dem Oberwerkzeug nach unten abragen und bei einer Montage des Oberwerkzeuges mit den Befestigungsaufnahmen verbindbar sind.
2.3. Einsatz zum Schweißen thermoplastischer Kunststoffe.

## Beschreibung

Die Erfindung betrifft eine Vibrationsschweißmaschine mit einem Maschinengestell, dem eine Aufnahmeeinheit für ein Unterwerkzeug und ein Aufnahmeteil für ein Oberwerkzeug zugeordnet sind, wobei der Aufnahmeteil für das Oberwerkzeug eine Vielzahl von über seine Grundfläche verteilt angeordneten Befestigungspunkten aufweist, an denen das Oberwerkzeug mittels einer entsprechenden Anzahl von Befestigungsmitteln befestigbar ist.

Eine derartige Vibrationsschweißmaschine ist aus einem Prospekt "Vibrations-Schweißmaschinen" der Anmelderin allgemein bekannt. Die bekannte Vibrationsschweißmaschine weist ein Maschinengestell auf, in dem eine Aufnahmeeinheit in Form eines Hubtisches verlagerbar angeordnet ist. Die Aufnahmeeinheit trägt ein Unterwerkzeug. Oberhalb der Aufnahmeeinheit ist ein Aufnahmeteil gehalten, das zur Befestigung eines Oberwerkzeuges dient. Der Aufnahmeteil für das Oberwerkzeug ist schwingbeweglich mit Hilfe von Federn an einer Portalplatte gehalten, die schwingungstechnisch von dem Maschinengestell abgekoppelt, dennoch aber mit diesem verbunden ist. Der Aufnahmeteil bildet somit einen Schwingkopf eines Feder-Masse-Systems, das durch wechselseitig beaufschlagbare Elektromagneten betätigt wird. Auch die Portalplatte ist Teil des Schwingungssystems. Die Schwingung des Feder-Masse-Systems erfolgt bei Resonanzfrequenz. Das Oberwerkzeug wird mit Hilfe einer Vielzahl von Befestigungsschrauben in dem als Schwingkopf dienenden Aufnahmeteil befestigt. Hierzu weist der Aufnahmeteil Gewindebohrungen auf, die von einer Unterseite des Aufnahmeteiles her in das Aufnahmeteil eingebracht sind. Das Oberwerkzeug ist mit Bohrungen versehen, durch die die Befestigungsschrauben von unten her hindurchgesteckt und in die Gewindebohrungen des Aufnahmeteiles eingeschraubt werden. Die Montage des Oberwerkzeuges an dem Aufnahmeteil erfolgt durch wenigstens eine Bedienperson als Überkopfmontage.

Aufgabe der Erfindung ist es, eine Vibrationsschweißmaschine der eingangs genannten Art zu schaffen, die eine vereinfachte Montage eines Oberwerkzeugs ermöglicht.

Diese Aufgabe wird dadurch gelöst, dass das Oberwerkzeug auf seiner dem Aufnahmeteil zugewandten Oberseite mit Befestigungsaufnahmen versehen ist, und dass in dem Aufnahmeteil Befestigungsmittel angeordnet sind, die zu dem Oberwerkzeug gerichtet und derart auf die Befestigungsaufnahmen abgestimmt sind, dass bei einer Montage des Oberwerkzeugs die Befestigungsmittel mit den Befestigungsaufnahmen verbindbar sind. Erfindungsgemäß erfolgt gegenüber dem Stand der Technik eine Umkehrung der Befestigungsfunktionen. Das Oberwerkzeug ist nunmehr mit Befestigungsaufnahmen versehen, die zu der dem Aufnahmeteil zugewandten Seite hin offen sind, um die Befestigungsmittel aufnehmen zu können, die in dem Aufnahmeteil angeordnet sind und zu dem Oberwerkzeug hin nach unten abragen. Efindungswesentlich ist es, dass eine Montage des Oberwerkzeuges an dem Aufnahmeteil nun nicht mehr als Überkopfmontage durch eine Bedienperson durchgeführt werden muss, sondern eine Befestigung des Oberwerkzeuges von oberhalb des Aufnahmeteiles aus ermöglicht ist. Dadurch wird eine vereinfachte Montage erzielt. Zudem muss das Oberwerkzeug nicht mehr mit Durchtrittsbohrungen versehen sein, um die Montage zu ermöglichen. Vielmehr kann das Oberwerkzeug auf seiner dem Unterwerkzeug zugewandten Unterseite ohne Funktionsflächen für entsprechende Montagemöglichkeiten versehen sein, da die Befestigungsaufnahmen an der Oberseite des Oberwerkzeuges vorgesehen sind.

In Ausgestaltung der Erfindung sind die Befestigungsmittel von einer Oberseite des Aufnahmeteiles her zugänglich und weisen Werkzeugangriffsflächen auf, die das Angreifen eines Befestigungswerkzeuges von oben her ermöglichen. Dadurch wird in einfacher Weise eine Montage mittels eines entsprechenden Befestigungswerkzeuges von oberhalb des Aufnahmeteiles ermöglicht.

In weiterer Ausgestaltung der Erfindung sind als Befestigungsmittel Kopfschrauben vorgesehen, die in Durchtrittsbohrungen des Aufnahmeteiles hängend gehalten sind und über eine Unterseite des Aufnahmeteiles nach unten abragen. Die Durchtrittsbohrungen sind vorzugsweise abgestuft ausgeführt, um die hängende Anordnung der Kopfschrauben zu gewährleisten.

In weiterer Ausgestaltung der Erfindung ist als Befestigungswerkzeug wenigstens ein Schraubendreher an dem Maschinengestell angeordnet, der mit einem Drehantrieb versehen ist und den Kopfschrauben für einen Ein- oder Ausschraubvorgang zustellbar ist. Der Schraubendreher ist vorzugsweise permanent an dem Maschinengestell angeordnet und erlaubt eine automatische Montage des Oberwerkzeuges.

In weiterer Ausgestaltung der Erfindung ist der Schraubendreher in einer Führungsanordnung in einer Parallelebene zu einer Oberfläche des Aufnahmeteiles verfahrbar angeordnet. Dadurch ist es möglich, eine geringe Anzahl von Schraubendrehern, vorzugsweise ein bis zwei, für die Schraubvorgänge aller Kopfschrauben einzusetzen.

In weiterer Ausgestaltung der Erfindung ist die Führungsanordnung mit wenigstens einem Stellantrieb versehen.

In weiterer Ausgestaltung der Erfindung ist dem Schraubendreher ein Hubantrieb zugeordnet, um den Schraubendreher höhenzuverlagern. Die verschiedenen Antriebe ermöglichen eine vollautomatische Montage oder Demontage des Oberwerkzeuges. Der Hubantrieb dient vorzugsweise lediglich dazu, den Schraubendreher in Hubrichtung dem entsprechenden Schraubenkopf zuzustellen. Die anschließende Nachführung des Schraubendrehers zu der Ein- oder Ausschraubbewegung der jeweiligen Kopfschraube erfolgt über eine Federvorspannung eines Schraubenschaftes des Schraubendrehers, indem der Schraubendreher axial beweglich angeordnet und durch entsprechende Druckfederkräfte permanent beaufschlagt ist.

In weiterer Ausgestaltung der Erfindung ist eine Steuereinrichtung vorgesehen, die den wenigstens einen Drehantrieb und/oder den wenigstens einen Hubantrieb und/oder den wenigstens einen Stellantrieb ansteuert. Dadurch ist es möglich, mit Hilfe vorgebbarer Steuerprogramme eine vollautomatische Montage oder Demontage durchzuführen.

In weiterer Ausgestaltung der Erfindung sind der Führungsanordnung wenigstens ein Wegsensor und/oder dem Hubantrieb ein Hubsensor zugeordnet, die an die Steuereinrichtung angeschlossen sind. Dadurch können die Verfahrwege des wenigstens einen Schraubendrehers erfasst und in der Steuereinrichtung verarbeitet werden.

In weiterer Ausgestaltung der Erfindung ist dem Schraubendreher ein Drehmomentsensor zugeordnet, der ein Anziehdrehmoment des Drehantriebs erfasst. Hierdurch ist eine weitere physikalische lstgröße erfassbar, die entsprechend ausgewertet werden kann.

In weiterer Ausgestaltung der Erfindung weist die Steuereinrichtung einen Mikroprozessor auf, der Istwerte der Sensoren mit Sollwerten eines Kennfeldspeichers vergleicht und die Antriebe abhängig von einem Ergebnis des jeweiligen Soll-/Istwertvergleiches ansteuert. Dadurch wird eine vollautomatische Steuerung oder Regelung entsprechender Montage- oder Demontagevorgänge des Oberwerkzeuges ermöglicht.

In weiterer Ausgestaltung der Erfindung ist in dem Kennfeldspeicher ein räumliches Koordinatensystem abgespeichert, in dem wenigstens eine Referenzposition des wenigstens einen Schraubendrehers sowie Positionen der Kopfschrauben koordinatenmäßig definiert sind. Eine Eingabe dieser Positionen in einen entsprechenden Speicher der Steuereinrichtung bzw. des Mikroprozessors ist notwendig, um die Bewegungen des Schraubendrehers vollautomatisch durchführen zu können.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Darstellung eine Ausführungsform einer erfindungsgemäßen Vibrationsschweißmaschine,
- Fig. 2: die Vibrationsschweißmaschine nach Fig. 1 in einer Frontansicht,
- Fig. 3: die Vibrationsschweißmaschine nach den Fig. 1 und 2 in einer Draufsicht,
- Fig. 4: eine Schnittdarstellung der Vibrationsschweißmaschine nach Fig. 3 entlang der Schnittlinie IV-IV in Fig. 3,
- Fig. 5: einen vergrößerten Ausschnitt der Schnittdarstellung nach Fig. 4,
- Fig. 5a: einen weiter vergrößerten Ausschnitt V aus Fig. 5, und
- Fig. 6: in perspektivischer, vergrößerter Darstellung einen oberen Bereich der Vibrationsschweißmaschine nach Fig. 1 unter Integration eines Druckschaltbildes.

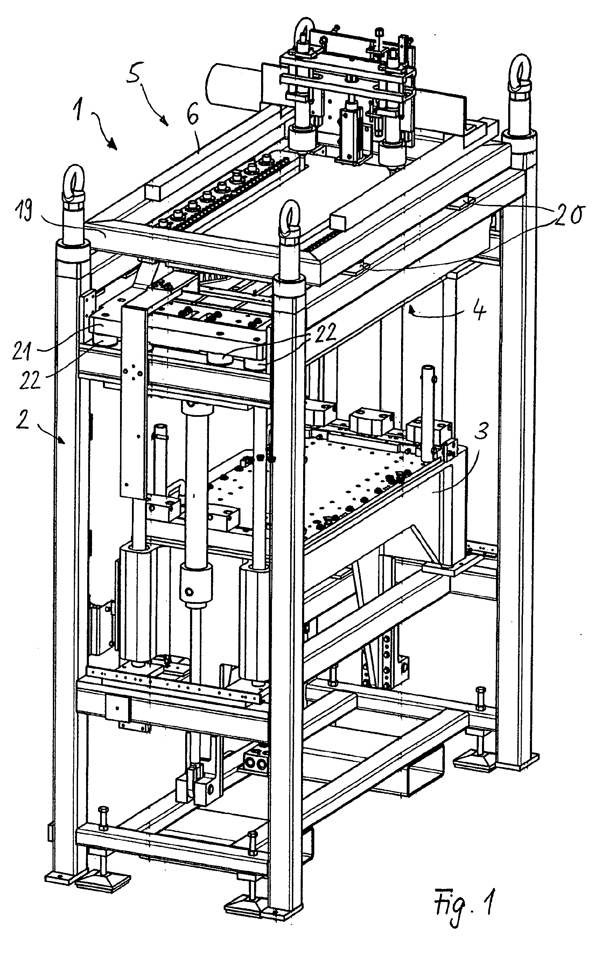

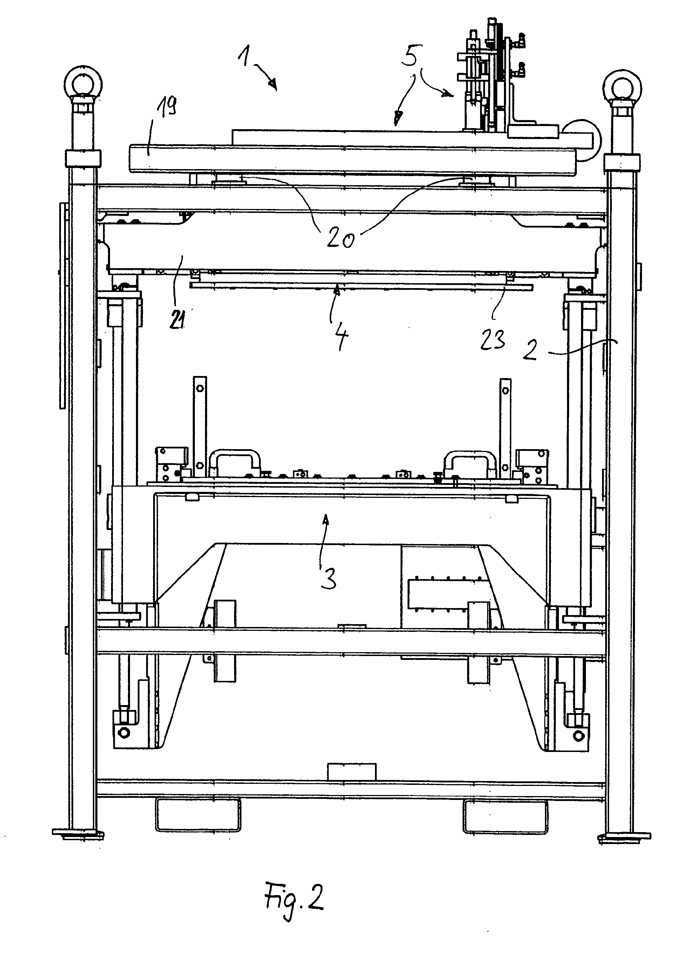

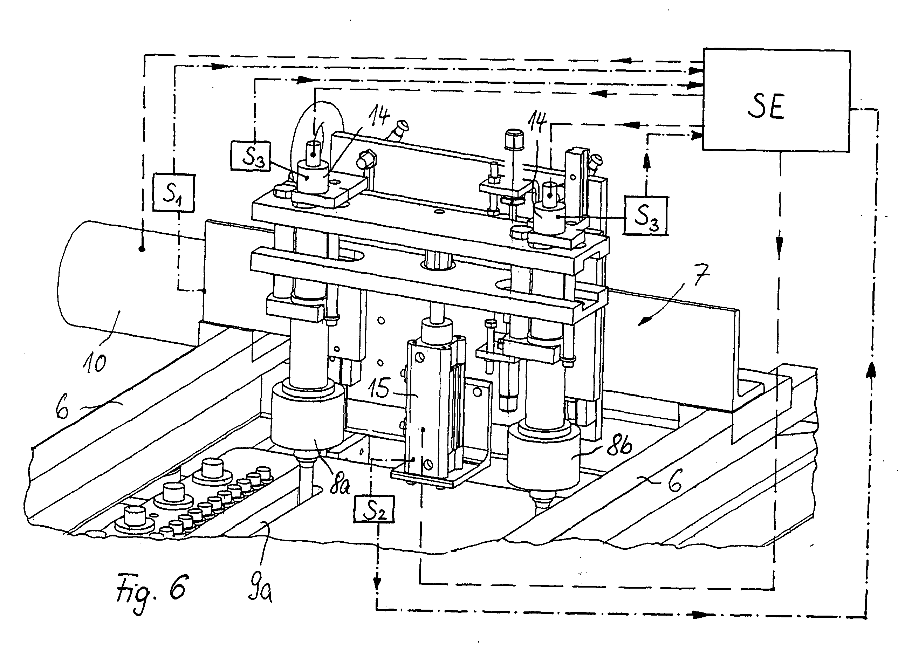

Eine Vibrationsschweißmaschine 1 nach den Fig. 1 bis 6 dient zum Schweißen von Kunststoffteilen. Mittels der Vibrationsschweißmaschine sind insbesondere Bauteile aus thermoplastischen Kunststoffen aller Art, vorzugsweise hochtemperaturbeständigen Kunststoffen, aus niederviskosen Materialien, Kunststoffe mit hohem Füllstoffanteil wie auch unterschiedliche Materialien wie insbesondere Holzverbundstoffe oder Textilien schweißbar.

Die Vibrationsschweißmaschine 1 weist ein Maschinengestell 2 auf, in dem ein Hubtisch 3 hubbeweglich angeordnet ist, der als Aufnahmeeinheit für ein Unterwerkzeug dient.

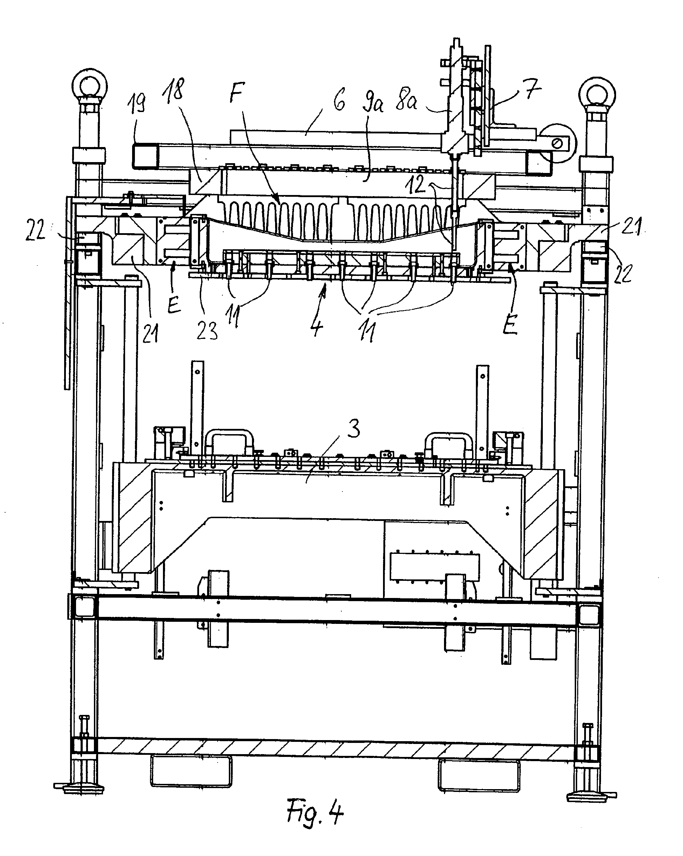

Oberhalb des Hubtisches 3 ist ein Aufnahmeteil 4 für ein Oberwerkzeug schwingbeweglich an einer Federanordnung F gehalten, wobei der Aufnahmeteil 4 einen Schwingkopf bildet. Wie anhand der Fig. 4 erkennbar ist, sind beidseitig des als Schwingkopf dienenden Aufnahmeteiles 4 Elektromagneten E angeordnet, die wechselseitig beaufschlagt werden und so den an der Federanordnung F aufgehängten Aufnahmeteil 4 auf Resonanzfrequenz bringen. Die Federanordnung F ist an einer Portalbrücke 18, 21 gehalten, die Teil des Schwingungssystems, d.h. Teil des Feder-Masse-Systems der Vibrationsschweißanlage ist. Die Portalbrücke 18, 21 ist auf dem Maschinengestell 2 angeordnet und durch Dämpfungselemente 22, vorzugsweise Gummidämpfer, schwingungstechnisch von dem Maschinengestell abgekoppelt. Eine Befestigungswerkzeuganordnung 5, auf die nachfolgend noch näher eingegangen werden wird, ist mittels eines Tragrahmens 19 mit dem Maschinengestell 2 verbunden und durch Dämpfungselemente 20, die insbesondere als Gummipuffer ausgebildet sind, schwingungstechnisch von dem Schwingungssystem, d.h. von dem Feder-Masse-System, abgekoppelt.

Dadurch wird ein entsprechender Vibrationsschweißvorgang in die Wege geleitet. Die Funktionsweise eines solchen Vibrationsschweißvorganges ist grundsätzlich bekannt, so dass hierauf an dieser Stelle nicht näher eingegangen werden muss.

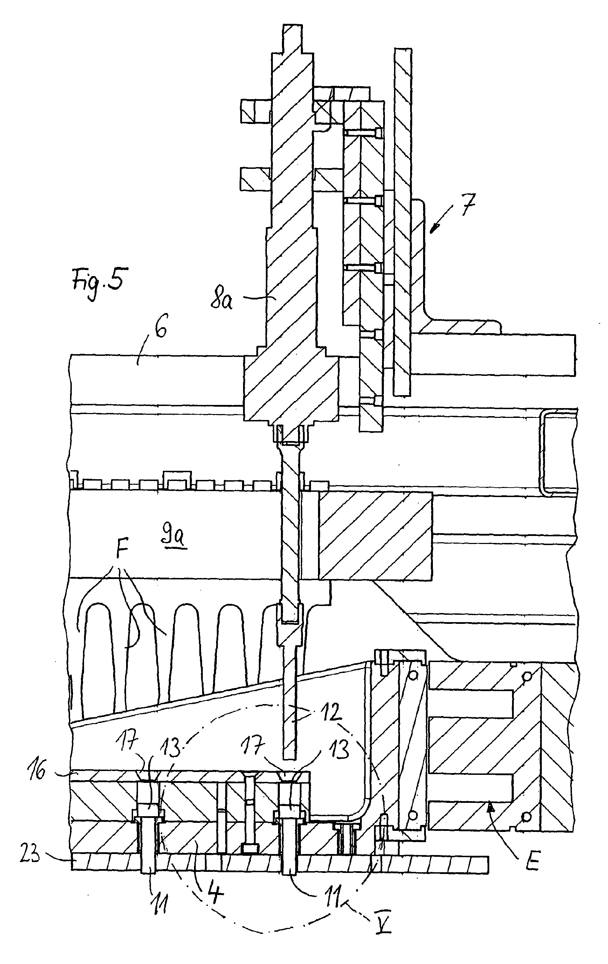

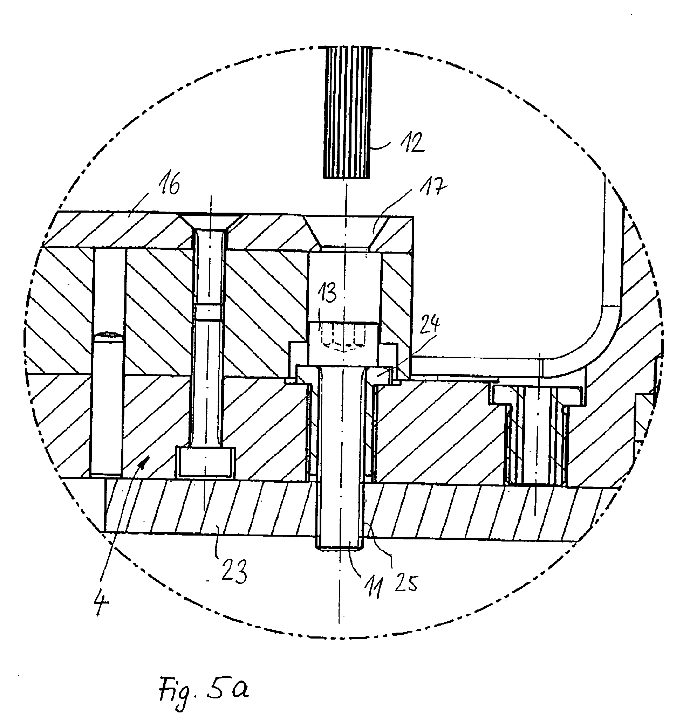

Um ein Oberwerkzeug 23 an dem Aufnahmeteil 4 befestigen zu können, ist das Oberwerkzeug 23 an seiner zu dem Aufnahmeteil 4 gewandten Oberseite mit einer Vielzahl von über eine Grundfläche des Oberwerkzeuges 23 verteilt angeordneten Befestigungsaufnahmen in Form von Gewindebohrungen 25 versehen, in die Befestigungsmittel in Form von Kopfschrauben 11 einschraubbar sind, die in dem Aufnahmeteil 4 gehalten sind und über eine Unterseite des Aufnahmeteiles 4 nach unten hinausragen (siehe insbesondere Fig. 4, 5 und 5a). Die Kopfschrauben 11 sind von oben her in Durchtrittsbohrungen des Aufnahmeteiles 4 eingesetzt und weisen Schraubenköpfe 13 auf, die sich jeweils auf einer Anschlaghülse 24 innerhalb einer unteren, als Gewindebohrung gestalteten Durchtrittsbohrung abstützen. Die Anschlaghülse ist in eine Gewindebohrung des Aufnahmeteiles eingeschraubt. Die Anschlaghülse 24 ist mit einem oberen Anlagebund versehen, auf dem der Schraubenkopf 13 aufliegt. Die Bohrungen sind mit von oben nach unten abgestuften Durchmessern versehen, wobei ein lichter Durchmesser der unteren Durchtrittsbohrung durch einen Innendurchmesser der Anschlaghülse gebildet ist. Der so gebildete, ringförmige Stufenabsatz in jeder Durchtrittsbohrung dient zur Auflage des jeweiligen Anschlagringes und damit zur Auflage des Schraubenkopfes 13 jeder Kopfschraube 11.

Wie anhand der Fig. 5 und 5a erkennbar ist, ragen die Kopfschrauben 11 in ihrer verschraubten Funktionslage über eine Unterseite des Aufnahmeteiles 4 hinaus und sind in eine obere Grundplatte des Oberwerkzeugs 23 eingeschraubt. Hierzu ist die Grundplatte 23 des Oberwerkzeugs mit Gewindebohrungen 25 versehen, in die die Schraubenschäfte der Kopfschrauben 11 eingeschraubt sind.

Wie anhand der Fig. 4 und 5 sowie 5a weiter erkennbar ist, ist der Aufnahmeteil 4 mehrschichtig aufgebaut, wobei die Bohrungsabschnitte der Durchtrittsbohrungen mit unterschiedlichen Durchmessern jeweils in unterschiedlichen Schichtteilen des Aufnahmeteiles 4 vorgesehen sind. Wie anhand der Fig. 5, 5a erkennbar ist, weist der Aufnahmeteil 4 eine Deckplatte 16 auf, die mit den übrigen Schichtplatten des Aufnahmeteiles 4 fest verbunden ist. In der Deckplatte 16 sind konisch nach unten verjüngte Zentrierabschnitte 17 vorgesehen, die zum einen als Verliersicherung für die Kopfschrauben 11 dienen und zum anderen dazu vorgesehen sind, eine Zentrierung eines Schaftes 12 eines Schraubendrehers 8a, 8b bei einem Eintauchen des Schaftes 12 in die entsprechende Durchtrittsbohrung des Aufnahmeteiles 4 zu ermöglichen.

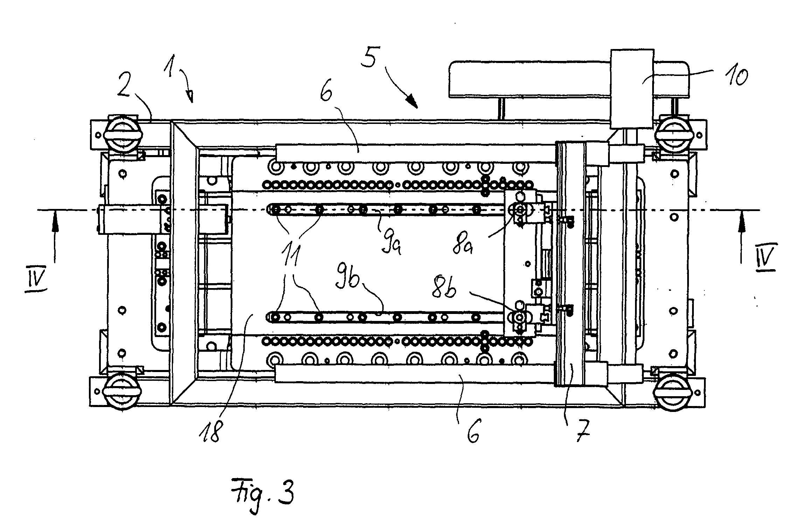

Wie anhand der Fig. 3 erkennbar ist, wird das Oberwerkzeug an dem Aufnahmeteil 4 mit Hilfe von zwei parallelen Reihen von Befestigungspunkten montiert. Beim dargestellten Ausführungsbeispiel sind in jeder Reihe jeweils sieben zueinander beabstandete Kopfschrauben 11 und eine entsprechende Anzahl von Durchtrittsbohrungen in dem Aufnahmeteil 4 vorgesehen, wobei die Kopfschrauben 11 und die Durchtrittsbohrungen jeweils in einer Reihe linear fluchtend positioniert sind. Die beiden Reihen sind, wie die Fig. 3 zeigt, parallel zueinander ausgerichtet.

Um ein automatisches Ein- und Ausschrauben der Kopfschrauben 11 von oben her zu ermöglichen, ist dem Aufnahmeteil 4 eine Befestigungswerkzeuganordnung 5 zugeordnet, die zwei Schraubendreher 8a, 8b aufweist. Die beiden Schraubendreher 8a, 8b sind jeweils mit einem Drehantrieb 14 in Form eines Luftmotors oder Pneumatikantriebs versehen und in einem Führungsschlitten 7 gehalten, der auf Führungsschienen 6 parallel zu dem Aufnahmeteil 4 und längs der beiden Reihen der Kopfschrauben 11 verfahrbar ist. Der Führungsschlitten 7 und die Führungsschienen 6 bilden eine Führungsanordnung im Sinne der Erfindung. Der Führungsschlitten 7 weist eine nicht bezeichnete Halterung auf, in der die beiden Schraubendreher 8a, 8b drehbeweglich gehalten sind. Der Halterung ist zudem ein Hubantrieb 15 zugeordnet, der eine Vertikalbewegung, d.h. eine Hubbewegung, der Schraubendreher 8a, 8b ermöglicht, um eine entsprechende Ein- oder Ausschraubbewegung der Kopfschrauben 11 zu ermöglichen. Die beiden Schraubendreher 8a, 8b weisen jeweils einen Verlängerungsschaft 12 auf, der zweiteilig gestaltet ist und an seinem unteren Ende mit entsprechenden Werkzeugangriffsflächen versehen ist, die in korrespondierende Werkzeugangriffsflächen der Schraubenköpfe 13 eingreifen. Die Verlängerungsschäfte 12 sind innerhalb der Schraubendreher 8a, 8b axial beweglich gehalten und stehen in Einschraubrichtung unter Federvorspannung, so dass sie zwangsläufig gegen die Werkzeugangriffsflächen der Schraubenköpfe 13 gepresst werden. Die Halterung zusammen mit den Schraubendrehern 8a, 8b und dem Führungsschlitten 7 wie auch den Führungsschienen 6 ist oberhalb der Portalbrücke 18, 21 an dem Tragrahmen 19 angeordnet. In einer Portalplatte 18 der Portalbrücke 18, 21 ist für jeden Verlängerungsschaft 12 jeweils eine Längsnut 9a vorgesehen, die jeweils einen nach oben und nach unten offenen Durchtrittsschlitz aufweist. Die beiden Durchtrittsschlitze 9a, 9b sind parallel zueinander ausgerichtet und exakt fluchtend oberhalb jeweils einer Reihe von Kopfschrauben 11 in der Portalplatte 18 angeordnet, um den Zugriff auf die Kopfschrauben 11 für die Schraubendreher 8a, 8b zu ermöglichen.

Der Führungsschlitten 7 ist einschließlich der Halterung und der Schraubendreher 8a, 8b durch einen Stellantrieb 10 längs der Führungsschienen 6 stufenlos oder schrittweise verfahrbar. Mittels des Stellantriebes 10 wird der Führungsschlitten 7 derart relativ zu dem Aufnahmeteil 4 verfahren, dass die Verlängerungsschäfte 12 der beiden Schraubendreher 8a, 8b exakt oberhalb jeweils eines Paares von Kopfschrauben 11 angeordnet ist. Sobald diese Position erreicht ist, werden die beiden Schraubendreher 8a, 8b mittels des Hubantriebes 15 abgesenkt und durch ihre Drehantriebe 14 in Drehung versetzt, bis die Werkzeugangriffsflächen der Verlängerungsschäfte 12 in die korrespondierenden Werkzeugangriffsflächen der Schraubenköpfe 13 formschlüssig eingreifen. Durch den entstehenden Anpressdruck werden Steuerglieder wie insbesondere Steuerventile betätigt, die eine Axialbewegung der Verlängerungsschäfte freigeben. Dadurch werden die Verlängerungsschäfte aufgrund der jetzt wirksamen Federvorspannung nach unten axial druckbelastet und ermöglichen die Nachführbewegung der Verlängerungsschäfte bei einer Einschraubbewegung der Kopfschrauben. Die Drehantriebe bewirken den Ein- oder Ausschraubvorgang.

Bei einer nicht dargestellten Ausführungsform ist vorzugsweise die Hubbewegung jedes Schraubendrehers 8a, 8b in ihrer Feineinstellung unabhängig von einer entsprechenden Hubbewegung des anderen Schraubendrehers 8a, 8b einstellbar. Dadurch ist es möglich, jeden Schraubendreher 8a, 8b individuell mit einer nach unten wirkenden Druckkraft zu beaufschlagen, um eine entsprechende Druckkraft und ein entsprechendes Drehmoment auf die jeweilige Kopfschraube 11 aufzubringen.

Jedem Drehantrieb 14 ist ein Drehmomentsensor S₃ zugeordnet, der durch Messung entsprechender physikalischer Größen des Drehantriebes wenigstens ein momentanes Drehmoment, vorzugsweise ein maximal zulässiges Drehmoment, erfasst und den Drehantrieb 14 entsprechend ansteuert. Nach Erreichen eines entsprechenden Anzugmomentes für die jeweilige Kopfschraube 11 wird der jeweilige Schraubendreher 8a, 8b stillgesetzt und entweder individuell oder gemeinsam mit dem anderen Schraubendreher 8a, 8b und dem Hubantrieb 15 zusammen mit der Halterung nach oben bewegt. Nun kann die nächste Schraubstelle angefahren werden.

Bei einer weiteren, nicht dargestellten Ausführungsform ist kein Drehmomentsensor vorhanden. Vielmehr ist das Einschraubdrehmoment der Verlängerungsschäfte und der Schraubendreher so begrenzt, dass die Verlängerungsschäfte bei Erreichen des entsprechenden Anzugdrehmomentes der Kopfschrauben 11 stehen bleiben.

Um eine vollautomatische Montage oder Demontage des Oberwerkzeuges zu ermöglichen, ist dem Hubantrieb 15 ein Hubsensor S₂ zugeordnet. Zudem ist dem Stellantrieb 10 ein Wegsensor S₁ zugeordnet, der die momentane Stellung des Führungsschlittens 7 erfasst. In nicht näher dargestellter Weise ist ein Datenspeicher vorgesehen, in dem innerhalb eines imaginären, gestellfesten Koordinatensystems die exakten Koordinaten jeder Kopfschraube 11 vermessen und vorgegeben sind. Zudem ist wenigstens eine Referenzstellung des Führungsschlittens 7 und wenigstens eine Referenzhubposition der Schraubendreher 8a, 8b definiert und im Datenspeicher abgelegt. Mittels dieser Daten werden für den Aufnahmeteil 4 entsprechende Kennfelder vorgegeben, die abhängig von einer Gestaltung des Oberwerkzeuges und abhängig von der Positionierung entsprechender Gewindebohrungen in dem Oberwerkzeug wie auch abhängig von den entsprechenden Durchtrittsbohrungen in dem Aufnahmeteil 4 gebildet sind.

Die beschriebenen Sensoren S₁ bis S₃ sind an eine zentrale Steuereinheit SE angeschlossen, die als elektronische Steuereinheit ausgeführt ist und insbesondere wenigstens einen Mikroprozessor aufweist. Die Steuereinheit SE ist mit Hilfe von Steuerleitungen an den Stellantrieb 10, an den Hubantrieb 15 und an die Drehantriebe 14 angeschlossen, um abhängig von den durch die Sensoren S₁ bis S₃ erfassten Istwerten und entsprechenden Soll-/Istwertvergleichen mit den eingegebenen Daten des Datenspeichers eine entsprechende Ansteuerung der Antriebe 10, 14, 15 durchzuführen. Dadurch ist es möglich, das Oberwerkzeug mit dem Aufnahmeteil 4 vollautomatisch zu verschrauben und nach entsprechend durchgeführten Vibrationsschweißvorgängen auch wieder von dem Aufnahmeteil 4 zu lösen.

## Patentansprüche

1. Vibrationsschweißmaschine mit einem Maschinengestell, dem eine Aufnahmeeinheit für ein Unterwerkzeug und ein Aufnahmeteil für ein Oberwerkzeug zugeordnet sind, wobei der Aufnahmeteil für das Oberwerkzeug eine Vielzahl von über seine Grundfläche verteilt angeordneten Befestigungspunkten aufweist, an denen das Oberwerkzeug mittels einer entsprechenden Anzahl von Befestigungsmitteln befestigbar ist,
**dadurch gekennzeichnet,dass**
das Oberwerkzeug auf seiner dem Aufnahmeteil (4) zugewandten Oberseite mit Befestigungsaufnahmen (26) versehen ist, und dass in dem Aufnahmeteil (4) Befestigungsmittel (11, 13) angeordnet sind, die zu dem Oberwerkzeug gerichtet und derart auf die Befestigungsaufnahmen (26) abgestimmt sind, dass bei einer Montage des Oberwerkzeuges die Befestigungsmittel (11, 13) mit den Befestigungsaufnahmen verbindbar sind.

2. Vibrationsschweißmaschine nach Anspruch 1, **dadurch gekennzeichnet, dass** die Befestigungsmittel (11, 13) von einer Oberseite des Aufnahmeteiles (4) her zugänglich sind und Werkzeugangriffsflächen aufweisen, die das Angreifen eines Befestigungswerkzeuges (5, 8a, 8b, 12) von oben her ermöglichen.

3. Vibrationsschweißmaschine nach Anspruch 2, **dadurch gekennzeichnet, dass** als Befestigungsmittel Kopfschrauben (11) vorgesehen sind, die in Durchtrittsbohrungen des Aufnahmeteiles (4) hängend gehalten sind und über eine Unterseite des Aufnahmeteiles (4) nach unten abragen.

4. Vibrationsschweißmaschine nach Anspruch 2, **dadurch gekennzeichnet, dass** als Befestigungswerkzeug wenigstens ein Schraubendreher (8a, 8b) an dem Maschinengestell (2) angeordnet ist, der mit einem Drehantrieb (14) versehen ist und den Kopfschrauben (11) für einen Ein- oder Ausschraubvorgang zustellbar ist.

5. Vibrationsschweißmaschine nach Anspruch 4, **dadurch gekennzeichnet, dass** der Schraubendreher (8a, 8b) in einer Führungsanordnung (6, 7) in einer Parallelebene zu einer Oberfläche des Aufnahmeteiles (4) verfahrbar angeordnet ist.

6. Vibrationsschweißmaschine nach Anspruch 5, **dadurch gekennzeichnet, dass** die Führungsanordnung (6, 7) mit wenigstens einem Stellantrieb (10) versehen ist.

7. Vibrationsschweißmaschine nach Anspruch 4, **dadurch gekennzeichnet, dass** dem Schraubendreher (8a, 8b) ein Hubantrieb (15) zugeordnet ist, um den Schraubendreher (8a, 8b) höhenzuverlagern.

8. Vibrationsschweißmaschine nach einem der vorhergehenden Ansprüche, **dadurch gekennzeichnet, dass** eine Steuereinrichtung (SE) vorgesehen ist, die den wenigstens einen Drehantrieb (14), und/oder den wenigstens einen Hubantrieb (15) und/oder den wenigstens einen Stellantrieb (10) ansteuert.

9. Vibrationsschweißmaschine nach Anspruch 5, **dadurch gekennzeichnet, dass** der Führungsanordnung (6, 7) wenigstens ein Wegsensor (S₁) und/oder dem Hubantrieb ein Hubsensor (S₂) zugeordnet sind, die an die Steuereinrichtung (SE) angeschlossen sind.

10. Vibrationsschweißmaschine nach Anspruch 9, **dadurch gekennzeichnet, dass** dem Schraubendreher (8a, 8b) ein Drehmomentsensor (S₃) zugeordnet ist, der ein Anzugdrehmoment des Drehantriebes (14) erfasst.

11. Vibrationsschweißmaschine nach Anspruch 8, **dadurch gekennzeichnet, dass** die Steuereinrichtung (SE) einen Mikroprozessor aufweist, der Istwerte der Sensoren (S₁ bis S₃) mit Sollwerten eines Datenspeichers vergleicht und die Antriebe (10, 14, 15) abhängig von einem Ergebnis des jeweiligen Soll-/Istwertvergleiches ansteuert.

12. Vibrationsschweißmaschine nach Anspruch 11, **dadurch gekennzeichnet, dass** in dem Datenspeicher ein räumliches Koordinatensystem abgespeichert ist, in dem wenigstens eine Referenzposition des wenigstens einen Schraubendrehers (8a, 8b) sowie Positionen der Kopfschrauben (11, 13) koordinatenmäßig definiert sind.
